# EUROPEAN PATENT APPLICATION

(11) **EP 3 220 257 A1**
(43) Date of publication of application: **20.09.2017**
(21) Application number: 16182347.1
(22) Date of filing: 02.08.2016
(51) Int. Cl.: G06F 3/12

(54) **MOBILE TERMINAL, INFORMATION PROCESSING PROGRAM AND INFORMATION PROCESSING METHOD**

(30) Priority: 18.03.2016 JP 2016055523
(71) Applicant: Fuji Xerox Co., Ltd., Minato-ku, Tokyo (JP)
(72) Inventor: SUZUKI, Tatsuro, Yokohama-shi, Kanagawa (JP); OMORI, Satoshi, Yokohama-shi, Kanagawa (JP)
(74) Representative: Ward, James Norman

(57) **Abstract**

There is provided a mobile terminal. A near field communication unit performs near field communication. A wireless communication unit performs wireless communication that differs in a communication protocol from the near field communication. An acquiring unit, when a connection with an image forming apparatus is established through the near field communication unit, acquires identification information of the image forming apparatus from the image forming apparatus through the near field communication unit. A print instructing unit, when the acquiring unit acquires the identification information, but print completion information is not recorded in a storage unit, transmits print instruction information to instruct printing of data to the image forming apparatus of the identification information through the wireless communication unit or the near field communication unit, and records the print completion information in the storage unit.

## Description

### TECHNICAL FIELD

The present invention relates to a mobile terminal, an information processing program and an information processing method.

### RELATED ART

In the past, an NFC supporting device capable of executing communication (hereinafter, "near field communication (NFC) communication") according to an NFC standard has been put into practical use, and a communication system using a peer to peer (P2P) mode in which two-way communication is performed between a pair of NFC supporting devices has been proposed (for example, see Patent Document 1).

This communication system includes a mobile terminal serving as an NFC supporting device and a multifunction peripheral (MFP), and when the mobile terminal is passed over the MFP in the P2P mode, image data, portable document format (PDF) data, and the like stored in the mobile terminal are transmitted to the MFP, and printing is performed.

Patent Document 1: Japanese Patent Application Publication No. 2015-069458A

In the near field communication in which the distance between devices is short such as the NFC communication, a connection is established, and printing is performed by passing the mobile terminal over the MFP, but when such an operation is performed by passing the mobile terminal, there are cases in which, due to relative positional deviation between the position of the antenna of the mobile terminal and the position of the antenna of the MFP or influence of noise, the connection is disconnected once, and then the connection is established again. In this case, printing is performed through the connection that is first established, and then when the connection is established again, second printing is performed, and thus duplicated printing is performed against the intention of the user.

### SUMMARY

It is an object of the present invention to provide a mobile terminal, an information processing program and an information processing method, which are capable of preventing duplicated printing that is caused in the near field communication against the intention of the user.
[1] A mobile terminal, comprising: a near field communication unit that performs near field communication; a wireless communication unit that performs wireless communication that differs in a communication protocol from the near field communication; an acquiring unit that, when a connection with an image forming apparatus is established through the near field communication unit, acquires identification information of the image forming apparatus from the image forming apparatus through the near field communication unit; and a print instructing unit that, when the acquiring unit acquires the identification information, but print completion information indicating that printing has been completed is not recorded in a storage unit, transmits print instruction information to instruct printing of data to the image forming apparatus of the identification information through the wireless communication unit or the near field communication unit, and records the print completion information in the storage unit.
[2] The mobile terminal according to [1], wherein the print instructing unit records the print completion information in association with the identification information when the print completion information is recorded in the storage unit, and transmits the print instruction information to the image forming apparatus of the identification information when the acquiring unit acquires the identification information, and the print completion information is not recorded in the storage unit in association with the identification information.
[3] The mobile terminal according to [1] or [2], wherein after recording the print completion information in the storage unit, the print instructing unit clears the print completion information at a predetermined timing or ignores the print completion information and transmits the print instruction information to the image forming apparatus of the identification information based on the identification information reacquired by the acquiring unit when there is an explicit reprint instruction from a user.
[4] The mobile terminal according to [1], wherein, after transmitting the print instruction information to the image forming apparatus, the print instructing unit causes the mobile terminal to transition from a standby state to a non-standby state, and ignores the print completion information and transmits the print instruction information to the image forming apparatus when the mobile terminals enters the standby state by an operation of the user.
[5] An information processing program causing a computer to function as: an acquiring unit that, when a connection with an image forming apparatus is established through near field communication, acquires identification information of the image forming apparatus from the image forming apparatus through the near field communication; and a print instructing unit that, when the acquiring unit acquires the identification information, but print completion information indicating that printing has been completed is not recorded in a storage unit, transmits print instruction information to instruct printing of data to the image forming apparatus of the identification information through wireless communication that differs in a communication protocol from the near field communication or the near field communication, and records the print completion information in the storage unit.

According to configurations of [1] and [5], it is possible to prevent duplicated printing that is caused in the near field communication against the intention of the user.

According to configuration of [2], it is possible to print the same data through plural image forming apparatuses.

According to configuration of [3], it is possible to repeatedly print the same data if desired by the user.

According to configuration of [4], it is possible to ignore print completion information when it enters a standby state by an operation of the user.

### BRIEF DESCRIPTION OF THE DRAWINGS

Exemplary embodiments of the present invention will be described in detailed based on the following figures, wherein:
Fig. 1 is a block diagram functionally illustrating an exemplary configuration of an information processing system according to an exemplary embodiment of the present invention;
Fig. 2 is a diagram illustrating an exemplary print management table; and
Fig. 3 is a flowchart illustrating an exemplary operation of a mobile terminal.

### DETAILED DESCRIPTION

Hereinafter, an exemplary embodiment of the present invention will be described with reference to the appended drawings. In the drawings, components having substantially the same function are denoted by the same reference numerals, and a duplicated description will be omitted. In the exemplary embodiment, an image processing apparatus will be described as an exemplary information processing apparatus, but the information processing apparatus may be any other information processing apparatus.

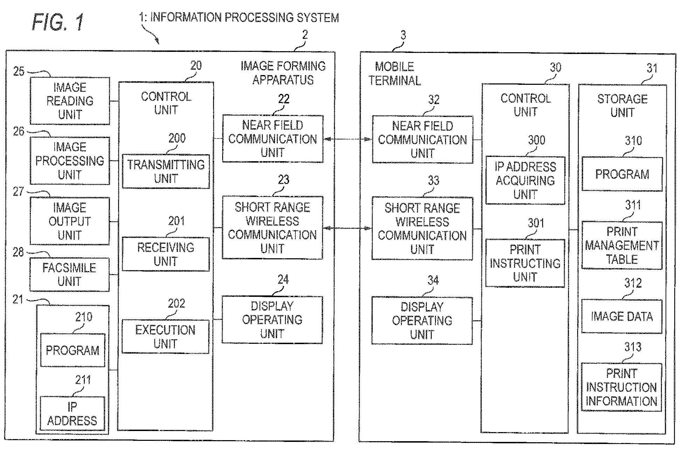

Fig. 1 is a block diagram functionally illustrating an exemplary configuration of an information processing system according to an exemplary embodiment of the present invention. The information processing system 1 is configured such that an image forming apparatus 2 and the mobile terminal 3 are connected so that wireless communication can be performed therebetween.

### (Configuration of image forming apparatus)

The image forming apparatus 2 is a multifunction device having plural functions such as a copy function, a scanning function, a printing function, and a facsimile function, and includes a control unit 20 that controls respective units of the image forming apparatus 2, and a storage unit 21, a near field communication unit 22, a short range wireless communication unit 23, a display operating unit 24, an image reading unit 25, an image processing unit 26, an image output unit 27, and a facsimile unit 28 are connected to the control unit 20.

The near field communication unit 22 performs near field communication in which a communicable distance is, for example, about 10 cm or less with a near field communication unit 32 of the mobile terminal 3. As such communication, in the exemplary embodiment, for example, NFC communication in which the P2P mode is possible is used.

The storage unit 21 is implemented by a read only memory (ROM), a random access memory (RAM), a hard disk, or the like, and stores a program 210, an IP address 211 allocated to its own apparatus, and the like. Here, the IP address 211 is exemplary identification information of the image forming apparatus 2.

When the near field communication unit 22 and the near field communication unit 32 of the other party are within the communicable distance, for example, when a distance between antennas is about 10 cm or less, a connection of the near field communication is established. Further, in the state in which the near field communication unit 22 and the near field communication unit 32 of the other party are within the communicable distance, and thus the connection is established, when the near field communication unit 32 of the other party deviates from the communicable distance, the connection of the near field communication is disconnected.

The short range wireless communication unit 23 performs short range wireless communication with a short range wireless communication unit 33 of the mobile terminal 3 within a communicable distance larger than that of the near field communication unit 22, for example, a distance of about 100 m or less. As such communication, for example, a wireless local area network (LAN) with intervention of a LAN router such as a wireless fidelity (Wi-Fi) or wireless communication with no intervention of a LAN router such as Wi-Fi Direct or Bluetooth (a registered trademark) may be used. The short range wireless communication unit 23 uses a communication protocol different from that of the near field communication unit 22.

The display operating unit 24 includes a touch panel display in which a touch panel is superimposed on a display unit such as a liquid crystal display, and causes an operation screen to be displayed on the display unit and receives an operation on the touch panel from an operator.

The image reading unit 25 is configured, for example, with a scanner, and reads image data from an original and input the image data. The image processing unit 26 performs image processing such as compression, decompression, and synthesis on the image data input from the image reading unit 25 or the like. The image output unit 27 includes, for example, an image holding member by a photoconductor, forms an image on a recording medium such as a sheet, and output the resulting medium. The facsimile unit 28 performs modulation and demodulation on data according to a facsimile protocol such as G3 or G4, and performs facsimile communication via a telephone line.

The control unit 20 is configured with a central processing unit (CPU), an interface, and the like. The CPU operates according to a program 10 stored in the storage unit 21 and thus functions as a transmitting unit 200, a receiving unit 201, an execution unit 202, and the like and executes the P2P mode.

When the near field communication unit 22 establishes the connection of the near field communication with the near field communication unit 32 of the mobile terminal 3, the transmitting unit 200 reads the IP address 211 from the storage unit 21, and transmits the IP address 211 to the mobile terminal 3 through the near field communication unit 22.

When the short range wireless communication unit 23 establishes the connection of the short range wireless communication with the short range wireless communication unit 33 of the mobile terminal 3, the receiving unit 201 receives the print instruction information 313 to instruct printing of data from the mobile terminal 3 through the short range wireless communication unit 23. The receiving unit 201 transfers the received print instruction information 313 to the execution unit 202.

The execution unit 202 executes the printing process according to the print instruction information 313 transferred from the receiving unit 201. In other words, the execution unit 202 controls the image output unit 27 such that data is printed under a printing condition set by the print instruction information 313. The image output unit 27 prints data on a recording medium such as a sheet under the printing condition set by the print instruction information 313. The execution unit 202 may control the image processing unit 26 or the facsimile unit 28 such that a process is performed depending on instruction information transferred from the receiving unit 201.

Some or all of the transmitting unit 200, the receiving unit 201, and the execution unit 202 may be configured with a hardware circuit such as a field programmable gate array (FPGA) or an application specific integrated circuit (ASIC).

### (Configuration of mobile terminal)

The mobile terminal 3 includes a control unit 30 that controls respective units of the mobile terminal 3, and a storage unit 31, the near field communication unit 32, the short range wireless communication unit 33, and a display operating unit 34 are connected to the control unit 30. The mobile terminal 3 may be a personal computer, a tablet type computer, a multifunctional telephone (smart phone), a mobile phone, or the like.

The storage unit 31 is implemented by a ROM, a RAM, a hard disk, or the like, and stores a program 310, a print management table 311, image data 312, the print instruction information 313, and the like. The print management table 311 may be stored in a storage region of an application program. The program 310 is an exemplary information processing program.

The near field communication unit 32 performs the near field communication with the near field communication unit 22 of the image forming apparatus 2, and has the same function as the near field communication unit 22 of the image forming apparatus 2.

The short range wireless communication unit 33 performs the short range wireless communication with the short range wireless communication unit 23 of the image forming apparatus 2, and has the same function as the short range wireless communication unit 23 of the image forming apparatus 2.

The display operating unit 34 includes a touch panel display in which a touch panel is superimposed on a display unit such as a liquid crystal display, and causes an operation screen to be displayed on the display unit and receives an operation on the touch panel from an operator.

The control unit 30 is configured with a CPU, an interface, and the like. The CPU operates according to the program 310 stored in the storage unit 31 and thus functions as an IP address acquiring unit 300, a print instructing unit 301, and the like, and executes the P2P mode. The program 310 is an exemplary information processing program.

When the near field communication unit 32 establishes the connection of the near field communication with the near field communication unit 22 of the image forming apparatus 2, the IP address acquiring unit 300 acquires the IP address 211 of the image forming apparatus 2 through the near field communication unit 32. The IP address acquiring unit 300 notifies the print instructing unit 301 of the acquired IP address 211.

When the IP address acquiring unit 300 acquires the IP address 211, if a print completion flag indicating that printing is completed in association with the IP address 211 is not recorded in the print management table 311, the print instructing unit 301 transmits the print instruction information 313 to instruct printing of data to the image forming apparatus 2 of the IP address 211 through the short range wireless communication unit 33 using the IP address as the transmission destination, and records the print completion flag in the print management table 311 in association with the IP address 211. The print completion flag is exemplary print completion information.

After recording the print completion flag in the print management table 311, the print instructing unit 301 clears the print completion flag at a predetermined timing.

For example, the following timings are considered as the predetermined timing:
(1) when a predetermined period of time elapses after the print completion flag is recorded;
(2) when the user operates the display operating unit 34 to change a file to be printed;
(3) when the user operates the display operating unit 34 to change a printing condition;
(4) when a "reprint button" is provided on a screen displayed on the display operating unit 34, and there is an explicit reprint instruction from the user, for example, such that the "reprint button" is selected;
(5) when in a state in which the print completion flag is set to ON, a confirmation screen indicating whether or not reprinting is performed is displayed on the display operating unit 34, and an "OK" button is selected on the confirmation screen; and
(6) when an application ends.

Since (2) to (5) are operations that are intended by the user, printing may be permitted although the print completion flag is recorded. In other words, when there is the explicit reprint instruction from the user, the print instructing unit 301 may ignore the print completion flag and transmit the print instruction information 313 to the image forming apparatus 2 of the IP address 211 based on the IP address 211 reacquired by the IP address acquiring unit 300. In (5), printing may be canceled when "cancel" is selected on the confirmation screen.

Some or all of the IP address acquiring unit 300 and the print instructing unit 301 may be configured with a hardware circuit such as an FPGA or an ASIC. The IP address acquiring unit 300 may be executed by an operating system (OS), and the print instructing unit 301 may be executed by application software.

### (Operation of information processing system)

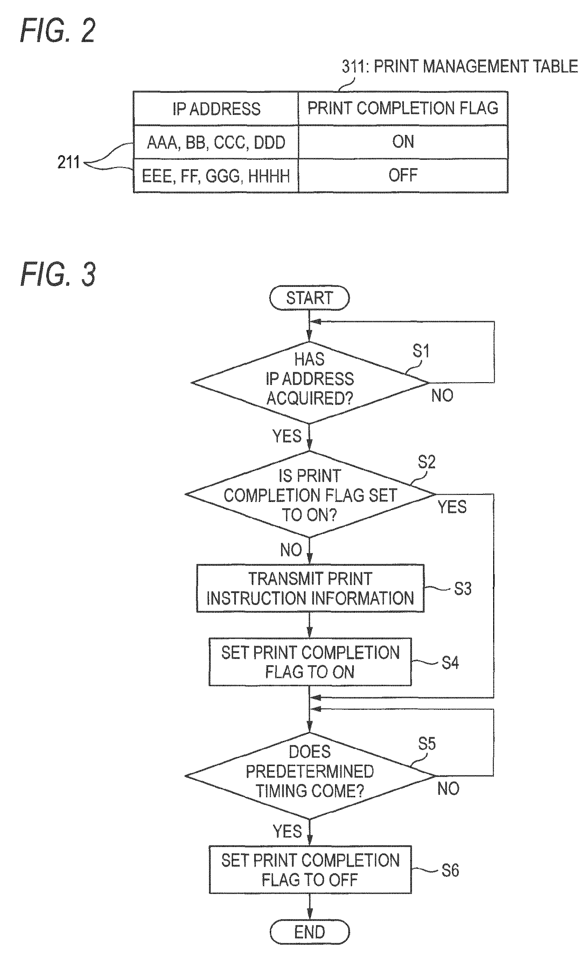

Next, an exemplary operation of the information processing system 1 will be described with reference to Figs. 2 and 3. Fig. 3 is a flowchart illustrating an exemplary operation of the mobile terminal 3.

### (1) Generation of print instruction information

First, the user operates the display operating unit 34 of the mobile terminal 3 to display the print setting screen. Then, the user operates the print setting screen to select the image data 312 of a file to be printed from the image data 312 stored in the storage unit 31.

Then, the user sets the printing condition for the selected image data 312 such as a color/monochrome, the number of sheets to be printed, and the like. The print instructing unit 301 generates the print instruction information 313 for giving an instruction to print the selected image data 312 under the set printing condition, and stores the print instruction information 313 in the storage unit 31. For example, by causing the selected image data to be displayed on the display operating unit 34, the print instructing unit 301 causes the mobile terminal 3 to enter a standby state for the near field communication and enables the P2P mode to be executable. A method of causing the mobile terminal to enter the standby state for the near field communication is not limited to the method of causing the selected image data to be displayed on the display operating unit 34, and it is desirable that it be in the state in which as the image data is selected, and the printing condition is set.

### (2) Acquisition of IP address

The near field communication unit 22 of the image forming apparatus 2 transmits a wireless signal at regular intervals and determines the presence or absence of a communication target. When the near field communication unit 32 of the mobile terminal 3 is brought close to (passed over) the near field communication unit 22 of the image forming apparatus 2 in the state in which the image data selected by the user is displayed on the display operating unit 34, the near field communication unit 22 of the image forming apparatus 2 detects the mobile terminal 3 twice or more consecutively, and establishes the connection of the near field communication with the near field communication unit 32 of the mobile terminal 3.

When the near field communication unit 22 establishes the connection of the near field communication with the near field communication unit 32 of the mobile terminal 3, the transmitting unit 200 reads the IP address 211 from the storage unit 21, and transmits the IP address 211 to the mobile terminal 3 through the near field communication unit 22.

Upon receiving the IP address 211 transmitted from the image forming apparatus 2 through the near field communication unit 32 (S1), the IP address acquiring unit 300 of the mobile terminal 3 notifies the print instructing unit 301 of the acquired IP address 211.

### (3) Transmission of print instruction information

The print instructing unit 301 determines whether or not the print completion flag is recorded (set to ON) in association with the IP address 211 that is notified of with reference to the print management table 311 (S2). When the print completion flag is determined not to be recorded (set to ON) in association with the IP address 211 that is notified of (No in S2), the print instructing unit 301 performs control such that the print instruction information 313 is transmitted from the short range wireless communication unit 33 to the image forming apparatus 2 using the IP address 211 as the transmission destination (S3). When the short range wireless communication unit 33 establishes the connection of the short range wireless communication with the short range wireless communication unit 23, the print instruction information 313 is transmitted to the short range wireless communication unit 23 of the image forming apparatus 2 through the short range wireless communication. Then, the print instructing unit 301 records (sets) the print completion flag (to ON) in the print management table 311 in association with the IP address 211 that is notified of (S4).

Fig. 2 is a diagram illustrating an example of the print management table 311. The print management table 311 includes an IP address field and a print completion flag field. The IP address 211 of the image forming apparatus 2 that is permitted to be used is registered in the IP address field in advance. In the example of Fig. 2, "AAA.BB.CCC.DDD" and "EEE.FF.GGG.HHH" are registered as an IP address. For example, when the IP address that is notified of from the image forming apparatus 2 is "AAA.BB.CCC.DDD," in step S4, the print instructing unit 301 records "ON" in the print completion flag field corresponding to "AAA.BB.CCC.DDD" as illustrated in Fig. 2.

Upon receiving the print instruction information 313 through the short range wireless communication unit 23, the receiving unit 201 transfers the print instruction information 313 to the execution unit 202. The execution unit 202 executes the printing process according to the print instruction information 313. The image output unit 27 prints the image data on a recording medium such as a sheet under the printing condition set by the print instruction information 313.

When the print completion flag is determined to be recorded (set to ON) in step S2 (Yes in S2), the print instructing unit 301 does not transmit the print instruction information 313 to the image forming apparatus 2.

At a predetermined timing after "ON" is recorded in the print completion flag field, for example, when a predetermined period of time (for example, one minute) elapses after the print completion flag is determined to be recorded (set to ON) (Yes in S5), the print instructing unit 301 clears "ON" recorded in the print completion flag field and records "OFF."

Since the print completion flag for the IP address "EEE.FF.GGG.HHH" is "OFF," the same file to be printed as the file that has been printed earlier can be printed by passing the mobile terminal 3 over the image forming apparatus 2 having the IP address "EEE.FF.GGG.HHH."

The exemplary embodiment of the present invention has been described above, but the present invention is not limited to the exemplary embodiment, and various modifications can be made within the scope not departing from the gist of the present invention.

### (First modified example)

In the exemplary embodiment, the IP address 211 of the image forming apparatus that is usable is recorded in the print management table 311 in advance, but only the IP address 211 in which printing has been performed recently may be recorded. In this case, printing is permitted when the IP address acquired for the second time is different from a recorded IP address.

### (Second modified example)

After transmitting the print instruction information to the image forming apparatus, the print instructing unit 301 may cause the mobile terminal 3 to transition from the standby state to the non-standby state, and when the mobile terminal 3 enters the standby state by the operation of the user, the print instructing unit 301 may ignore the print completion information and transmit the print instruction information 313 to the image forming apparatus 2.

### (Third modified example)

In the exemplary embodiment, user authentication has not been described, but when the user authentication is approved, the P2P mode may be executed.

### (Fourth modified example)

In the exemplary embodiment, the print instruction information 313 is transmitted through the short range wireless communication unit 33 since high-speed communication can be performed, but, for example, an amount of data is small, the print instruction information 313 may be transmitted through the near field communication unit 32.

### (Fifth modified example)

In the exemplary embodiment, image data has been described as a file to be printed, but data that is dealt with by the mobile terminal 3 such as a text, a PDF, or a web page may be set as a file to be printed.

Further, in the flow of the exemplary embodiment, for example, a step may be added, deleted, changed, or exchanged within the scope not departing from the gist of the present invention.

Moreover, the program used in the exemplary embodiment may be recorded in a computer readable recording medium such as a CD-ROM and provided.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A mobile terminal, comprising:
a near field communication unit that performs near field communication;
a wireless communication unit that performs wireless communication that differs in a communication protocol from the near field communication;
an acquiring unit that, when a connection with an image forming apparatus is established through the near field communication unit, acquires identification information of the image forming apparatus from the image forming apparatus through the near field communication unit; and
a print instructing unit that, when the acquiring unit acquires the identification information, but print completion information indicating that printing has been completed is not recorded in a storage unit, transmits print instruction information to instruct printing of data to the image forming apparatus of the identification information through the wireless communication unit or the near field communication unit, and records the print completion information in the storage unit.

2. The mobile terminal according to claim 1, wherein the print instructing unit records the print completion information in association with the identification information when the print completion information is recorded in the storage unit, and transmits the print instruction information to the image forming apparatus of the identification information when the acquiring unit acquires the identification information, and the print completion information is not recorded in the storage unit in association with the identification information.

3. The mobile terminal according to claim 1 or 2, wherein after recording the print completion information in the storage unit, the print instructing unit clears the print completion information at a predetermined timing or ignores the print completion information and transmits the print instruction information to the image forming apparatus of the identification information based on the identification information reacquired by the acquiring unit when there is an explicit reprint instruction from a user.

4. The mobile terminal according to claim 1, wherein, after transmitting the print instruction information to the image forming apparatus, the print instructing unit causes the mobile terminal to transition from a standby state to a non-standby state, and ignores the print completion information and transmits the print instruction information to the image forming apparatus when the mobile terminals enters the standby state by an operation of the user.

5. An information processing program causing a computer to function as:
an acquiring unit that, when a connection with an image forming apparatus is established through near field communication, acquires identification information of the image forming apparatus from the image forming apparatus through the near field communication; and
a print instructing unit that, when the acquiring unit acquires the identification information, but print completion information indicating that printing has been completed is not recorded in a storage unit, transmits print instruction information to instruct printing of data to the image forming apparatus of the identification information through wireless communication that differs in a communication protocol from the near field communication or the near field communication, and records the print completion information in the storage unit.

6. An information processing method comprising:
when a connection with an image forming apparatus is established through near field communication, acquiring identification information of the image forming apparatus from the image forming apparatus through the near field communication; and
when the identification information is acquired, but print completion information indicating that printing has been completed is not recorded in a storage unit, transmitting print instruction information to instruct printing of data to the image forming apparatus of the identification information through wireless communication that differs in a communication protocol from the near field communication or the near field communication, and recording the print completion information in the storage unit.
